# EUROPEAN PATENT APPLICATION

(11) **EP 0 598 469 A2**
(43) Date of publication of application: **25.05.1994**
(21) Application number: 93303061.1
(22) Date of filing: 20.04.1993
(51) Int. Cl.: G07F 7/10, G06F 15/30

(54) **Interactive credit card fraud control process**

(30) Priority: 27.10.1992 US 967268
(71) Applicant: Dunlevy, Daniel P., Boulder, Colorado 80301 (US)
(72) Inventor: Dunlevy, Daniel P., Boulder, Colorado 80301 (US)
(74) Representative: Gaunt, Robert John

(57) **Abstract**

The INTERACTIVE CREDIT CARD FRAUD CONTROL PROCESS system utilizes a computer with telephone interface, memory, voice recognition software and hardware, and an information archive and retrieval process. A computer program (10) is used to automatically and electronically control the determination of the caller as the authorized credit card holder, or conversely an unauthorized perpetrator attempting to make a credit card transaction. The telephone interface is connected to a telephone line and the caller dials a number that connects the caller with the present invention (12), which then captures certain information about the incoming call (14 & 16) and creates a permanent Record Stamp (18) of the call to which transactional information is added as the call progresses. The caller is asked question prompts, and the system receives voice and touch tone responses from the caller from which the system determines if a VoicePrint is applicable (20). The caller responses are managed by the present invention in a method that determines if the caller is the authorized credit card holder, and if the caller is not the authorized credit card holder the present invention captures information that can lead to the capture and conviction of the caller as a credit card fraud felon. The present invention uses the caller's spoken voice print of the card holder's name as one of the determining factors to determine if the caller is the authorized credit card holder (22). The VoicePrint, included in a claim in the present invention, uniquely and positively identifies a single person, and therefore becomes a valuable tool and evidence in the apprehension and conviction of perpetrators of credit card fraud. With a VoicePrint of the authorized credit card holder on file, the present invention prevents any other person except approved persons from making credit card transactions with that card number. Even without the VoicePrint, the control process is highly effective in limiting fraud risk and the present invention creates a VoicePrint of the caller, ties that identifier to the Record Stamp, and can thereafter identify that person as the person who was the caller. Additional claims relate to using the present invention for security and access control, including the gathering of positive identifying evidence of perpetrators.

## Description

### BACKGROUND OF THE INVENTION

The present invention relates to an interactive electronic system which limits the risk of fraudulent credit card orders and actually prevents persons from placing fraudulent orders if a voice print of the cardholder has been anchored to the credit card number. The volume of credit card fraud has grown dynamically, and recently the production of fraudulent copies of valid credit cards has created significant financial losses for credit card companies, banks and merchants. Perpetrators use such fake copies to purchase goods in person, and present cards including VISA and Master Card cards can be duplicated with adequate accuracy that "swipe" machines and the present "transaction authorization" process does not detect the fraud. Only after the original cardholder (receives his bill from the issuing bank and) complains is the fraud discovered, and by then the perpetrator may be untraceable. The present invention can prevent such fraud and further can provide a permanent record of identification of the perpetrator of the fraud.

### OBJECTS OF THE INVENTION

It is an object of the present invention to provide a system with the ability to electronically tie (anchor) a person's unique voice print to a credit card number.

It is also an object of the present invention to provide a system that can accurately determine if, upon receipt of another voice print after the credit card is anchored, this other voice print is from the same person as the anchored voice print and is therefore the authorized credit card holder, and to make available a process that provides the means to make this voice print match a requirement for credit card transaction approval.

It is also an object of the present invention to provide a system that can determine if the person is attempting to make a fraudulent credit card transaction, and further to capture a voice print and other information from that perpetrator that can lead to his capture and conviction.

It is also an object of the present invention to provide a system that can control credit card fraud by electronically capturing voice and touch tone responses to system prompts, then process those responses in such a manner that it can be determined with a relatively high degree of accuracy if the person providing the responses is the person originally issued the credit card.

It is also an object of the present invention to provide a system that identifies the telephone number of the telephone being used to give responses to system prompts, and to make that number part of the transaction history data on that response session. In this manner fraud investigators would know the geographical location of the perpetrator, and risk control limits can be monitored by measuring the frequency and volume of orders placed from that telephone.

It is also an object of the present invention to provide a system that permits a merchant to predetermine the level of credit card fraud risk he is willing to accept.

It is also an object of the present invention to provide a system that identifies the caller who is trying to perpetrate a fraudulent credit card transaction and provides law enforcement personnel with information that will assist in the capture and conviction of the perpetrator.

It is also an object of the present invention to provide a system that provides law enforcement personnel and fraud investigators with an electronic identification method whereby perpetrators of fraud or other criminal acts via telephone can be identified positively.

It is also an object of the present invention to provide a system that identifies the telephone number called, using DNIS, and permits the system to control and monitor callers by tracking previously issued ID numbers. This process permits supervision of telemarketers and salespersons for the purpose, among others, of preventing repeated use of credit card information after the cardholder approved transaction is completed.

It is also an object of the present invention to provide a system that compiles and stores transaction and call details, and can, on demand, produce management reports by converting digital computer files to printed text, modem reports, or voice reports. In this manner, merchants or system operators or law enforcement personnel can retrieve transaction information and summary reports, including detail information of attempted or actual fraudulent orders.

### Summary of Invention

The present invention provides a system, mostly automated and electronic, to control credit card fraud risk. The system is especially applicable for telephone and mail order credit card orders, which is the market segment that historically has experienced the highest impact from credit card fraud. The present invention utilizes state of the art computer technology including speech-to-text, text-to-speech and voice character prints as unique identifiers. In particular, the person seeking approval for the purchase of goods or services with a credit card communicates via telephone with the present invention. He inputs via touch tone or voice certain information in response to prompts. The responses are converted to digital messages and stored within the system's computer memory. As the caller responds, the computer performs a variety of electronic look ups, interacts electronically with bank and credit card systems, and limits risk by keeping track of order activity from this caller, this credit card, and this caller's telephone. The system can make a voice print of the authorized credit card holder which may be electronically anchored to the credit card. If the system determines a caller is not the person issued the card, additional data is captured to enable law enforcement to more easily apprehend the fraud perpetrator and to prove the perpetrator committed the fraud.

### DEFINITION OF TERMS USED

The following glossary of terms used in this patent application defines the meaning of technical words or jargon used in the industry as they are applied herein.

Anchor: to tie together, as to anchor a price to a box of cereal by applying a bar coded sticker to the box, which when read by the bar code reader, tells the cash register the current price of the cereal.

ANI: Automatic Number Identification, which tells the called party the telephone number of the telephone calling him.

Block: a geometric figure in a flow diagram representing a step or process, with a brief title of that process or step inside the figure.

Caller: the person placing the telephone call to the VRS computer containing the present invention. The caller can be a subscriber, a customer, a merchant or any other person.

Credit card: Any kind of card containing account numbers, or a series of numbers without a card, which numbers are designed only to be used by the authorized person, the card holder, for transactions wherein the card holder is charged for the transaction and billed by the Issuer.

Card holder: the person authorized by the Issuer to use a credit card.

Defrauder: a person using or attempting to use another person's credit card.

DNIS: Dialed Number Identification Service, which is a service the telephone companies provide that tells the called party what telephone number the caller dialed.

DTMF: Dual Tone Multi-Frequency, a fancy name describing touch tone telephone sounds that uniquely describe which button on the telephone the caller pushed.

Issued: the person authorized by the credit card Issuer to use the credit card.

Issuer: the institution that issues the credit card and thereby extends credit to the card holder.

Perpetrator: a person who commits credit card fraud.

RAM: Random Access Memory, the primary memory in a computer that contains information currently being used by the program in operation.

Record Stamp: a set of information compiled from different sources but related to one common transaction, which set of information comprises a unique computer file that contains adequate information to replay and recreate the transaction process.

Transaction: the process of calling the VRS computer containing the present invention and attempting to use or using a credit card to obtain authorization to charge the cost of the order to the credit card holder.

TT: Touch Tone, the type of telephone that allows the caller the option to send a DTMF signal instead of speaking.

VRS: Voice Response System, a computer containing an interactive voice response capability that permits the computer to read DTMF signals, digitized synthesized voice, or other voice or sound signals.

### BRIEF DESCRIPTION OF THE DRAWINGS

Further objects and advantages of the present invention can be found in the detailed description of the preferred embodiments when taken in conjunction with the accompanying drawings in which:
FIG. 1 is a flow chart showing the general process the system performs to accomplish its Objectives;
FIG. 2 is a flow chart showing the process the system performs using voice print technology to anchor the original authorized cardholder's voice print to his card number, and thereafter to use that voice print to control fraud;
FIG. 3 is a flow chart showing the process the system performs if a voice print is not applicable for any reason (usually because the caller is not the cardholder). Included is the process to control credit card fraud by telemarketers who might otherwise practice "abusive use" of previously authorized credit cards;
FIG. 4 is a flow chart showing the process the system performs to limit risk of fraud by limiting use frequency and dollar volume. This flow chart also shows the process for verifying delivery if delivery is required prior to authorizing the credit card charge. The chart further shows the process for obtaining authorization or denial from the approving agency and record stamping the transaction so all transaction information is retrievable.
FIG. 5 is a flow chart showing the fraud capture process of the system whereby, if the system has determined that someone other than the cardholder is placing the order, the system will gather additional responses specifically designed to collect information to permit fraud investigators and law enforcement to apprehend and convict the perpetrator;
FIG. 6 diagrammatically illustrates the system configured on a computer and coupled to a telephone line.

### DETAILED DESCRIPTION OF THE PREFERRED EMBODIMENTS

The present invention relates to an interactive electronic system to control credit card fraud risk and capture information that can lead to the apprehension and conviction of credit card fraud perpetrators. The process is automatic and entirely electronic except in the case where, due to lack of prior input, data verification requires an operator only because present state-of-the-art speech to text translation is unreliable. Improved speech to text translation will permit making the present invention process entirely electronic.

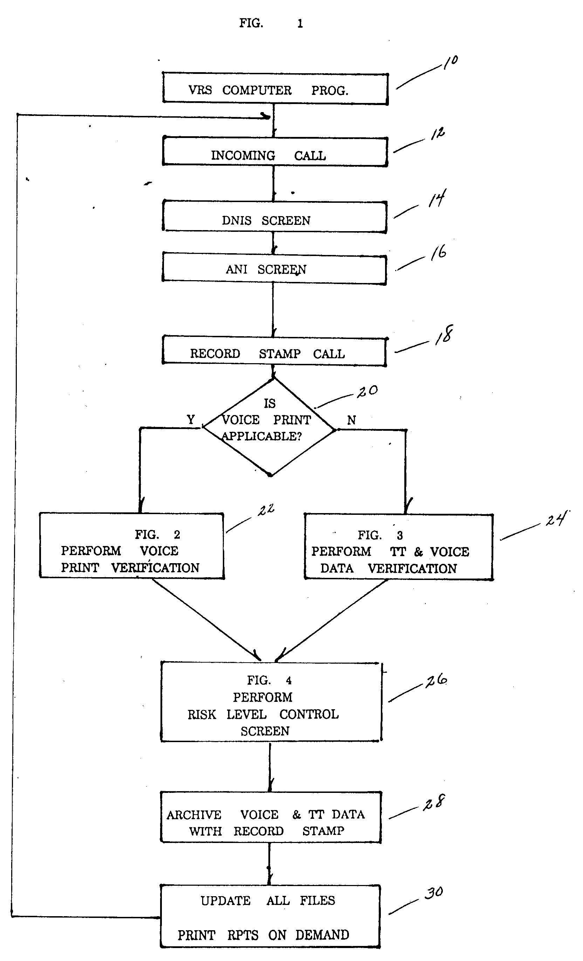

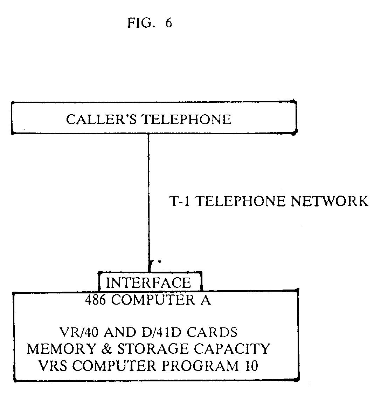

FIG. 1 diagrammatically illustrates the basic system by showing in flow chart form the process the computer performs using the present invention. This process is performed by the computer using a Voice Response System (VRS) program and further details of the computer configuration and its physical coupling to a telephone line are provided in FIG. 6. Fig. 1 shows a simple version of the invention and the principal steps of the computer program when the program is run on the VRS computer of FIG. 6.

The present invention assumes the person attempting to use a credit card to pay for a transaction will interact with the present invention via telephone with VRS computer program 10. The preferred method is to have the card holding purchaser personally speak and interact with the present invention, because the invented process can use a voice print as positive identification of the interacting person. The basic system illustrated in FIG. 1 processes incoming telephone call 12 in the following manner:

The VRS computer program 10 accepts incoming telephone call 12 and detects via Dialed Number Identification Service (DNIS) the telephone number called, and via Automatic Number Identification (ANI) the telephone number of the telephone being used to place the call. The number called is matched with the program's DNIS 14 data base and identifies which merchant or which specific screening process will be followed. Hence the telephone number called acts as a code for the program 10 and identifies which path, which data bases, which procedures and which processes apply to that incoming call. By using DNIS as a code, the present invention can handle many different incoming dialed telephone numbers even if the data bases and processing for each incoming number are different. The present invention thereby offers each merchant, by having a unique telephone number for customers to call, the opportunity to set his desired level of risk control as well as other customized parameters.. For example, a merchant offering goods through a mail order catalog may choose to exclude orders placed from high risk geographical locations like downtown Detroit. When the Detroit caller calls this merchant's number to place a credit card order, the DNIS 14 identifies the merchant and the fact that high risk orders are to be excluded. In this example ANI 16 identifies the telephone location and therefore the high-risk Detroit area. Another merchant with low product cost and high profit margins may be willing to accept the higher risk associated with (in this example) Detroit. DNIS 14 and ANI 16 therefore perform valuable identification and screening functions that direct the incoming call to the proper and desired data bases and procedural path of the VRS computer program 10.

Once DNIS identifies the incoming call as an acceptable and programmed code, the call detail is recorded. The time, date, DNIS and telephone number of the telephone being used to place the call are "stamped" as a data base record ("Record Stamp Call" 18) that permits this information to be carried through the transaction processes of computer program 10 so that reports can be generated that explain the outcome and results of that particular call transaction.

The next step is for the program to determine if a voice print is applicable, decision 20 in the flow diagram. A voice print is a recorded voice pattern unique to the speaker, just as finger prints are unique to each person. Each person has unique characteristics about their voice, so each person has a unique way of talking. Unless the caller indicates (by dialing a DNIS coded to require the caller to enter a pre-assigned ID number) that a voice print is NOT applicable, the program assumes a voice print is applicable.

Examples of credit card orders where voice prints are not applicable could be where merchants are calling to verify the validity of a prior credit card purchase. In this case, the merchant would enter his ID or password to access the program since the cardholder might not be available to provide a voice sample.

The highest degree of credit card fraud control occurs when the transaction is for a credit card with an anchored voice print of the person originally issued that card, hereinafter referred to as the "Issued". Credit card issuers establish credit limits when cards are issued, and the present invention does not concern itself with the Issued's credit availability except i) to get authorization from the issuer to make a charge, and ii) as a part of fraud control under conditions of abusive frequency or dollar volume.

The process for performing voice print verification is explained in detail under the discussion of FIG. 2, Perform Voice Print Verification. The process of preventing fraud if a voice print is not applicable is explained in detail under the discussion of FIG. 3, Perform TT and Voice Data Verification.

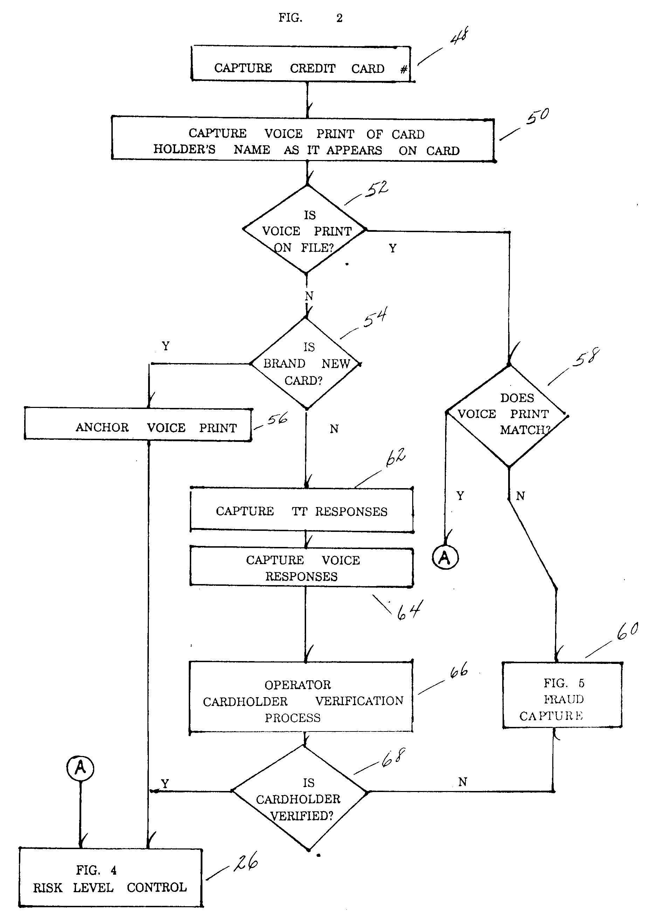

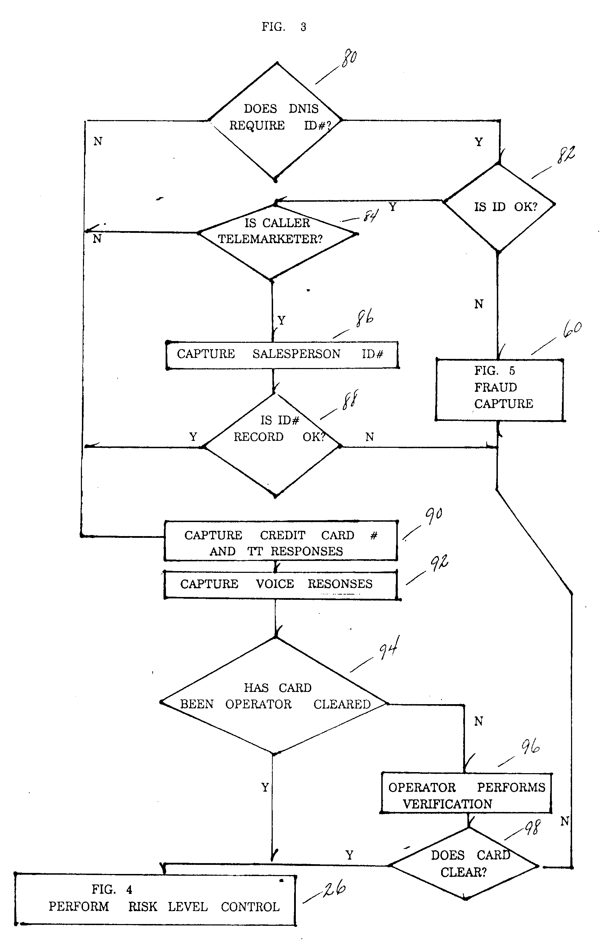

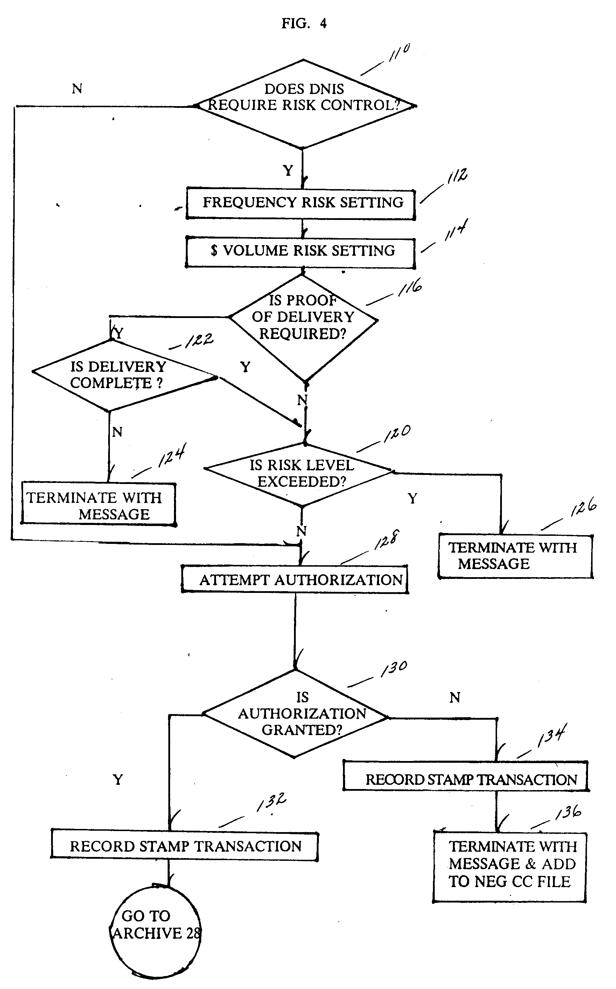

Once verification 22 via FIG. 2 or verification 24 via FIG. 3 is complete, risk of fraud is further reduced by screening transactions with risk level screens described in detail under the discussion of FIG. 4, Perform Risk Level Control Screen 26.

If the transaction completes the risk level control screens and issuer authorization is granted, the Record Stamp 18 is supplemented by anchoring all other transaction data (touch tone and voice) to that Record Stamp, and that complete transaction record is archived in the data base Archive 28. The last step in the VRS computer program 10 is to update all data bases as needed and print reports as demanded, the Update 30 block of FIG. 1. The program then returns to the beginning and awaits the next Incoming Call 12.

### FIG. 2 Detail Description

FIG. 2 is a general flow chart showing the present invention's process of voice print screening to minimize credit card fraud by verifying that the Issued is placing the order (interacting with the present invention). This process starts by capturing the credit card information. Touch tone telephones are telephones that generate dual tone, multifrequency signals (DTMF signals). If the caller has a touch tone (TT) telephone some information can be captured via Dialogic cards that read DTMF signals. For example, the caller could be asked to touch tone in his credit card number followed by the pound "#" sign. Each pressed number on the TT dial generates a unique DTMF signal. Dialogic D40, D41 and D41D models are some of the cards that can read these DTMF signals and convert the signals back into digits the computer can utilize. Thus the Capture Credit Card 48 and Capture More TT Responses block 62 indicate the program captures the caller's TT responses to question prompts. Among the data so captured may be the credit card number, expiration data, Issued's billing address zip code, Personal Identification Number (PIN), the telephone number the caller is calling from, and other data.

Capture Voice Responses 50 and Capture More Voice Responses 64 is the present invention's process of capturing the voice responses of the caller to question prompts (Capture Credit Card 48 can also be a voice capture). Voice responses may be captured and used in three ways;
i) directly as a voice file wherein the voice response is captured (as, for example, on magnetic tape) and only useful upon being replayed or transcribed, or
ii) indirectly by using a speech-to-text translation program that converts the voice into text readable by computer, or
iii) indirectly by converting the voice into a digital network of characteristics combined with sounds, which in totality forms a unique combination called a "voice print" that can not be duplicated by a different voice, such as is accomplished by the Voice Control Systems (VCS) speaker verification software.

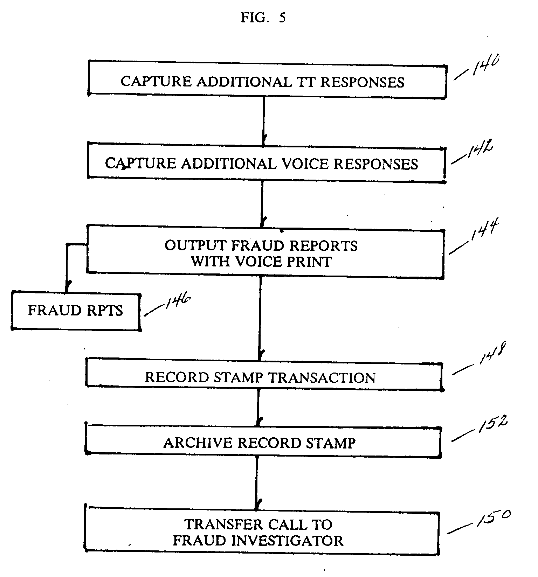

An important embodiment of the present invention is the process of having the Issued speak his name, creating a voice print of that, and tieing ("Anchoring") that voice print of the Issued's name to the credit card number. Decision 52 reads the credit card number captured in block 48 and looks into the voice print data base to see if there is voice print tied, or "Anchored", to that credit card number. If there is an anchored voice print, the computer compares the anchored voice print with the block 50 captured voice print. If both prints match for decision 58, the Issued is the caller and the transaction proceeds to FIG. 4. If the prints don't match the caller is trying to commit fraud and the transaction proceeds to FIG. 5.

If at decision 52 the computer discovers no voice print is anchored to the credit card number, the process proceeds to decision 54 and determines from issuing bank records if the card is brand new but unauthorized awaiting a voice print anchor. Voice print anchors on new cards can only be made from an Issuer authorized location, such as the bank itself, where card holder identity (by bank officer) can be verified, unless the Issued knows his PIN number. If the ANI matches an authorized location or the correct PIN number is used, the captured voice print is anchored to that credit card (block 56).

If at decision 54 the computer discovers the card is not new or the Issuer does not require voice prints, then the present invention proceeds to block 66 manual verification, which is a process of verifying that the caller responses 62 and 64 match known bank records. Some of this can be done electronically, but some verification may require operator assistance. Once decision 68 is made (based on the verification procedures), the transaction will proceed to FIG. 4 if the card holder is verified, or to FIG. 5 if not verified.

### FIG. 3 Detail Description

FIG. 3 is a general flow chart diagrammatically showing the process of performing touch tone (TT) and voice data verification when a voice print is not applicable for credit card fraud control. In practically every case this situation arises when a preauthorized person other than the Issued is placing the call to verify the transaction is not fraudulent. The caller therefore is in a position between the Issued and the present invention. The caller has obtained required responses from the Issued (or the person pretending to be the Issued) and the caller now seeks verification that the person who placed the order with him was, in fact, the Issued. This is typically the situation with telemarketers or merchants with substantial telephone or mail order business.

VRS computer program 10 has captured the DNIS 14 and in Decision 80 determines if the program requires that DNIS caller to have an ID or password in order to process the transaction. If that DNIS does require an ID or password, Decision 82 looks in the ID/Password data base to determine if the captured ID or Password is valid. If it is not valid, fraud is being committed and the transaction is forwarded to Fraud Capture 60. If the ID or Password is valid, the computer in Decision 84 determines (from the ID #) if the caller is a telemarketer (organization marketing and selling via telephone). If the caller is a telemarketer, the salesperson (ID or password) is matched with the salesperson data base to make sure (Decision 88) that salesperson has a clean record (no fraud record). The salesperson ID becomes part of the permanent Record Stamp 28 for future reference. If the salesperson does have a fraud record, the transaction is forwarded to Fraud Capture 60.

The present invention then Captures Credit Card and TT Responses 90 as well as Capture Voice Responses 92, which may be different from 50 and 52 captures because, in the 90 and 92 case, information is being collected on both the Issued and the caller.

Decision 94 requires the computer to look up in the "Operator Cleared" credit card data base and determine if this credit card has been operator verified within a recent set period of time. This is another method to give merchants control over fraud risk level and balance costs of fraud control with merchandising profits. If the time set dictates operator verification is required, Operator Performs Verification 96. If the card does not clear in Decision 98, the transaction is forwarded to Fraud Capture 60. If the card does clear Decision 98 or is within the time set for Decision 94, the transaction advances to FIG. 4.

### FIG. 4

FIG. 4 is a general flow chart diagrammatically showing how the present invention performs credit card fraud risk level control. This process starts with Decision 110 wherein the computer takes the DNIS 14 and, by looking up that DNIS's requirements in a data base, determines if that DNIS is scheduled for risk control. A merchant could decide that risk controls are too expensive or unnecessary. For example, a merchant selling investment advice for five dollars ($5.00) per call may decide that, because his cost is so small while value is high, he wants to accept for processing all credit card orders from verified callers, without FIG. 4 risk control except Attempted Authorization 128. Since historically the fraud rate for financial advisory customers is extremely small, this choice may be wise.

If the DNIS Decision 110 indicates risk control is desired, the computer program looks in the DNIS requirements data base and determines the Frequency Risk Setting 112 and the Dollar Volume Risk Setting 114. These settings are frequency and dollar volume limitations set by the merchant to control abusive and very probably fraudulent use of a credit card that would otherwise be Authorized 130. The process then determines if Decision 116 proof of delivery is required, and if "yes" the computer searches a Delivery Manifest File to make Decision 122 about completed delivery. If delivery has not been made, the new transaction is terminated with, "Awaiting proof of last delivery before new order can be accepted" 124. If delivery has been completed, the transaction advances to Decision 120, "Have the risk level Settings 112 and 114 been exceeded?" The Decision 120 is made by the program upon examining the historical Transaction Record Stamps 30 and counting the frequency and dollar volume set by DNIS requirements. If any of the prescribed risk levels have been exceeded, the transaction is terminated with, "Previous usage on this credit card exceeds risk control limits. Please contact your issuing bank or this merchant" 126.

If the risk control limits Decision 120 is favorable, the transaction advances to Attempt Authorization 128. Authorization is electronically requested by the VRS computer program 10 by calling a credit card authorization service, using DTMF to enter the credit card #, expiration date, and dollar value of the charge. The credit card authorization service examines negative card number files to see if the credit limits of the card have been exceeded or the Issuer has otherwise terminated authorization for that credit card number. If there is no negative file on that credit card, the authorization request 130 is granted and the credit card authorization service assigns an authorization number to that transaction, which becomes part of the present invention's Transaction Record Stamp 132, and the transaction advances to Archive 28. If the credit card authorization service declines authorization, the present invention places that information on the Transaction Record Stamp 134 and terminates the transaction with the 136 message, "Authorization has been declined. Please contact your issuing bank."

### FIG. 5

FIG. 5 is a general flow chart showing diagrammatically the present invention's process to capture specific information if the computer program has identified the call as a likely fraudulent transaction. At the time the transaction enters FIG. 5, the caller is unaware that the program has identified the call as probably fraudulent. The time to go from block 12, initially reading the incoming call, to FIG. 2 or FIG. 3 (requiring initial responses from caller) is less than one second. Responses for blocks 50 and 52 take about two minutes, during which period the operator verification is completed if necessary (the program actually progresses to block 54 immediately upon capturing the credit card number).

Fraud Capture 60 can be reached very quickly if a voice print is on file, and if there is a match other voice prompts are bypassed and the call advances immediately to FIG. 4. The time to get from Decision Determine if Risk Controls Apply 110 to Attempted Authorization 128 is less than one second. Electronic authorization usually takes about 26 seconds. It is therefore very possible, with a voice print on file, that a caller can obtain authorization in less than one minute.

Due to the speed of the computer program and the interaction with the caller, a fraudulent transaction is quickly advanced to FIG. 5 where Additional TT Responses 140 and Additional Voice Responses 142 are captured. These are caller responses to demographic and personal questions prepared by professional fraud investigators to help quickly gather additional information about the caller that will assist law enforcement officials in catching the perpetrator. Within one second of completing these responses, the caller is transferred to a live fraud investigator (block 150) for further questioning as needed. In the meantime, Fraud Reports 144 with voice prints are produced and the transaction is Record Stamped 148 for future reference, retrievable from the Archive 152.

### FIG. 6.

FIG. 6 diagrammatically illustrates the interactive system including the caller's telephone, the telephone network T-1, and the computer containing the present invention and necessary hardware. The 486 Computer A includes microprocessors coupled to the T-1 interface. Electronically stored in the computer are all the data bases needed by the present invention. VR/40 and D/41D Dialogic cards or the equivalent are needed for voice and DTMF input reading and translation. The VRS Computer Program 10 resides in memory.

## Claims

1. A method of credit card fraud risk control utilizing an interactive computer program with access via telephone lines and having the computer program, utilizing voice response technology, capture certain touch tone and voice responses that permit positive identification of the caller as the person authorized by the credit card Issuer to use that credit card; and this process is accomplished by
having the person needing authorization for the credit card charge communicate and interact with the present invention via telephone line;
using a Voice Response System (VRS) on computer to interact with the caller to obtain information and voice prints;
converting incoming touch tone DTMF signals to computer readable signals so touch tone responses by the caller can be automatically handled by the computer program;
using Dialed Number Identification System (DNIS) signals to determine the number called as a code for the computer program to identify what parts of the present invention are needed to control credit card fraud risk for the merchant involved;
using Automatic Number Identification (ANI) to capture the telephone number of the telephone being used by the caller, for the purpose of obtaining that information as part of the risk control algorithm;
using Automatic Number Identification (ANI) to capture the telephone number of the telephone being used by the caller, for the purpose of obtaining that information as part of the data permanently attached to the computer record of that transaction,
using Automatic Number Identification (ANI) to capture the telephone number of the telephone being used by the caller, for the purpose of obtaining that information as part of the data available to fraud investigators to assist in the capture of perpetrators of a fraudulent transaction,
anchoring all transaction data together, including voice responses and touch tone responses of the caller plus call detail records plus computer generated information resulting from data base relationships, as a Record Stamp of the transaction;
using the Record Stamp of the transaction to recover the complete history of the call together with all pertinent information;
using the Record Stamp as a method for fraud investigators to access and reproduce information about the call, caller and the overall transaction;
using the DNIS combined with a data base of voice prints to determine if the computer program requires a unique voice print to be anchored to the applicable credit card number before the card can be authorized for use;
creating a voice print of the person initially issued the credit card as a unique and positive identification method, to identify the caller as the person who is authorized to use the credit card;
creating a fixed relationship between a voice print and a credit card number, whereby the voice print is "anchored" to the credit card number in such a way that the computer can determine if the caller's voice print is the same as the anchored print;
using the voice print of the person initially issued the credit card as the authorized pattern, and comparing the voice print of the caller with the authorized pattern to determine if the caller is the person initially issued the credit card;
capturing a voice print of the caller that can be used by fraud investigators and law enforcement personnel to positively identify a person as the caller in a fraudulent transaction;
maintaining a data base of authorized patterns (voice prints of originally issued credit card holders) that can only be accessed or altered by approved persons;
establishing a process for using identification numbers and passwords to track and limit credit card use by persons other than the card holder;
establishing a process for using identification numbers and passwords to track and limit credit card transactions made by telemarketing personnel;
establishing a process for requiring and using identification numbers and passwords to track and limit credit card transactions by telemarketing personnel for the purpose of limiting the ability of a telemarketing salesperson to use a previously authorized credit card to place an order unauthorized by the card holder.
establishing a process for tracking identification numbers and passwords to track credit card transactions by telemarketing personnel when the telemarketing salesperson is using a previously authorized credit card to place an order unauthorized by the card holder, in order to permit fraud investigators and law enforcement personnel to reproduce the transaction history and positively identify the perpetrator of a fraudulent transaction;
establishing a process whereby an operator interacts with bank VRS machines or live bank personnel to verify from bank records that the caller is the authorized card holder;
establishing a process whereby the computer looks up in a historical data base the historic use of a credit card, and compares the historic use with frequency parameters and dollar volume parameters;
establishing a process whereby the computer looks up in a historical data base the historic use of a credit card, and compares the historic use with frequency parameters and dollar volume parameters for the purpose of limiting or preventing abusive use of a credit card;
establishing a process whereby the computer looks up in a historical data base the historic use of a credit card, and compares the historic use with frequency parameters and dollar volume parameters for the purpose of identifying a credit card transaction as having a high probability of being fraudulent;
establishing a process whereby the computer looks up in a historical data base the historic use of a credit card, and compares the historic use with frequency parameters and dollar volume parameters for the purpose of identifying a credit card transaction as having a high probability of being fraudulent and then capturing information from the caller in response to question prompts that increases the probability of identifying the perpetrator despite his attempts to give false information;
establishing a method for automatically verifying that a previous order has been filled and delivery made before another order is accepted on that credit card.

2. A method of using a voice print of a person speaking his own name as a distinct and unique identification pattern to identify the authorized credit card holder, and this method is comprised of the following steps:
the authorized credit card holder, identified by authorized bank personnel and in a secure bank approved location, calls the present invention via telephone and, at the prompt, speaks his full name; or
the authorized credit card holder, identified by authorized bank personnel and in a secure bank approved location, calls the present invention via telephone and, at the prompt, speaks his full name and his Personal Identification Number (PIN); or
the authorized credit card holder calls the present invention via telephone and, at the prompt, speaks his full name and his Personal Identification Number (PIN);
the Voice Response System (VRS) on the present invention, using Dialogic VR/40 and D/41D cards or the equivalent and Voice Control Systems' speaker verification software or the equivalent, captures what the authorized credit card holder says and creates a voice print file;
the voice print file contains the voice characteristics of the speaker, the sounds of the spoken message, and the spoken message, concatenated in such a way that it forms a unique and distinct identification that can not be duplicated except by the person who first spoke it;
the present invention creates a fixed relationship between the voice print of the authorized credit card holder and the card holder's credit card number such that if a different voice print is later associated with that same credit card number, the computer can differentiate and determine that the second relationship would be unauthorized.

3. A method of capturing information during a telephone transaction, which information can assist in the capture of persons committing credit card fraud, the method comprising the following steps:
the person attempting to use an unauthorized credit card or a credit card of another person, hereinafter called the "Defrauder", must attempt to make the present invention conclude that the Defrauder is the authorized credit card holder, and this Defrauder calls the present invention to obtain approval for the credit card transaction;
the Defrauder is prompted to respond with voice and touch tone responses just as if he were the card holder;
by comparing the voice print of the Defrauder speaking the card holder's name with the anchored voice print for the given credit card, the computer can determine that the Defrauder is not the authorized card holder; or
by comparing the touch tone responses of the Defrauder to the known personal, demographic and bank records of the card holder which are anchored to the given credit card, the computer can determine that the Defrauder is not the authorized card holder; or
by comparing the voice responses of the Defrauder to the known personal, demographic and bank records of the card holder which are anchored to the given credit card, the computer can determine that the Defrauder is not the authorized card holder; or
by comparing the voice responses of the Defrauder to the known personal, demographic and bank records of the card holder which are anchored to the given credit card, a live operator can determine that the Defrauder is not the authorized card holder; or
by comparing the touch toned PIN responses of the Defrauder to the known correct PIN number of the card holder which are anchored to the given credit card, the computer can determine that the Defrauder is not the authorized card holder;
the present invention creates a Record Stamp, which is an information file on the computer, that ties all information captured during the transaction plus call detail records plus computer generated information resulting from data base relationships;
the Record Stamp is archived in the computer memory, and the present invention can recall the Record Stamp from computer memory and replay the transaction to provide fraud investigators and law enforcement personnel and other approved persons all data generated during the actual transaction;
the present invention creates a voice print of every caller as part of the Record Stamp information, and that voice print of the caller speaking the authorized credit card holder's name, or name plus PIN number, becomes a positive identification of the Defrauder;
the present invention can replay the Defrauder's voice print of the authorized credit card holder's name;
if a suspected Defrauder is apprehended, he can be asked to create a voice print of the authorized credit card holder's name, or name and PIN number, and that voice print can be compared by the present invention with the actual Defrauder's voice print (captured during the fraudulent transaction), whereby the present invention can determine if the suspected Defrauder is actually the Defrauder.

4. A method and process of credit card fraud control utilizing live operators who, during the period of time when the present invention on the VRS computer is capturing touch tone and voice responses of the caller, can verify that the caller is the authorized card holder according to the bank records of the credit card issuer; and this process is comprised of the following steps:
having the operator transcribe the captured voice response to the question prompt, "speak the billing address of the credit card you are using";
having the operator transcribe the captured voice response to the question prompt,
"speak the name of the bank that issued your credit card";
the operator enters the text (translation) of the caller's spoken name of the issuing bank, and the present invention matches that bank's Bank Identification Number (BIN) with the known BIN of the credit card;
if the caller's spoken name of the issuing bank is not the same as the known issuer, the present invention advances the call to a fraud investigator;
if the caller's spoken name of the issuing bank is the same as the known issuer, the operator calls the bank and verifies (via live bank person or the bank's VRS machine) the caller's spoken billing address with the billing address according to bank records;
if the present invention's data base does not contain the Personal Identification Number (PIN) for the subject credit card, the operator can call from computer memory the caller's touch tone response to the question prompt, "Please touch tone in your PIN number", whereupon the operator calls the issuing bank and verifies that the caller's PIN response is the same as the authorized PIN number.

5. A method and automated process whereby the present invention can prevent duplicate credit card orders for a merchant, can give a caller the delivery status of his credit card order, and can prevent fraudulent credit card orders where caller holds a physically stolen credit card or is calling from or requesting delivery to a high risk address; and this process is accomplished by
letting the merchant determine the level of risk he wants to accept;
using Automatic Number Identification (ANI) to capture the telephone number of the telephone being used to place the call to the present invention;
matching the ANI with a data base of known high risk telephones such as prisons or high risk area codes;
capturing the credit card number and looking up in a data base the orders placed on that credit card to the called Dialed Number Identification System (DNIS) code;
if the order is a duplicate of a previous order, the caller can be told or, at the merchant's predetermined option, a second order can be denied;
if the caller selects by optional response to know the delivery status of his previous order, the present invention can provide that status;
if the caller requests delivery to a high risk location like a prison, correctional facility or mail drop box, the present invention can match the requested address with a data base of known high risk addresses and, at the merchant's predetermined option, the order can be denied;
the present invention creates a Record Stamp, which is an information file on the computer, that ties all information captured during the transaction plus call detail records plus computer generated information resulting from data base relationships;
the Record Stamp is archived in the computer memory, and the present invention can recall the Record Stamp and replay the transaction to provide fraud investigators and law enforcement personnel and other approved persons all data generated during the actual transaction;
the present invention creates a voice print of every caller as part of the Record Stamp information, and that voice print of the caller speaking the authorized credit card holder's name, or name plus PIN number, becomes a positive identification of the caller;
the present invention can replay the caller's voice print of the authorized credit card holder's name;
if a suspected Defrauder is apprehended, he can be asked to create a voice print of the authorized credit card holder's name, or name and PIN number, and that voice print can be compared by the present invention with the actual Defrauder's voice print, whereby the present invention can determine if the suspected Defrauder is actually the Defrauder.

6. The present invention provides a process of capturing voice prints of callers and, if said caller becomes a suspect in a credit card fraud case, the present invention can create a duplicate of the archived historical Record Stamp of the entire transaction, and that duplicate Record Stamp could be transported via computer diskette or telephone line to a clone of the present invention at another location, played aloud for an audience such as a jury, and would constitute evidence in criminal fraud cases; the steps of this process being
the present invention pulls the Record Stamp file from the historical archive section of its memory into the computer's RAM;
the present invention creates a duplicate file of all voice responses and also a duplicate file of all non-voice information;
the duplicate files can be transported on a diskette, via modem, or over the telephone line to a duplicate of the present invention or substitute VRS computer, whereupon the Record Stamp including the voice print of the caller can be replayed at the second location, which could be in a court room or other law enforcement location;
if the voice print of the caller matches the voice print of the suspect, prosecutors would have clear and definite evidence that the suspect was the caller and perpetrator;
this evidence in the form of the Record Stamp on diskette can be securely filed with other court evidence.

7. The present invention provides a means by which voice prints of criminals can be captured and stored and used to match captured voice prints of suspects to obtain the identification of a suspect who is (actually) a known criminal; the steps comprising this process are
having each convicted felon call the present invention from an authorized criminal justice center under the supervision of an authorized person;
have the felon speak his full name and capture the voice print;
have the felon speak a prescribed series of words and capture the voice prints;
anchor the voice prints to a data base identifying the felon;
have the suspect speak a prescribed series of words and capture the voice prints;
have the present invention run a comparison program until it identifies a match between a felon's voice print of one or more prescribed words and the suspect's voice print of one or more prescribed words;
have the suspect speak the name of the matched felon and capture that voice print;
if the voice prints of the felon's name match, the suspect is the felon;
use this process as part of a normal interview or transaction routine; for example, the prescribed series of words could be part of the requested voice responses to get approval of a credit card transaction, banking account inquiry, electronic transfer requests, ATM cash withdrawals, and similar applications.

8. The present invention provides a means by which arrested persons could be required, upon interview at the police station or at any telephone location, to make a voice print on the present invention that would be placed into an archive file assessable to law enforcement personnel at a later date or to serve the purposes of a "mug book" of electronic identification for future use.

9. The present invention creates a unique personal identification product that is an electronic amalgamation of a person's spoken word comprising
i) the grammatical word or words, plus
ii) the characteristics of that person's voice as he speaks the word or words, plus
iii) the person's particular sounds spoken as he speaks the word or words, which sounds are a product of the person's dialect and other learned behavior.
This personal identification product is a digital electronic computer file, called a "voice print", that can not be exactly duplicated by another person and that contains adequate computer readable identification characteristics that the computer can distinguish between duplicate copies of the voice print of the original person compared to attempted copies made by other persons.

10. A method of telephone fraud control utilizing an interactive computer program with access via telephone lines and having the computer program, utilizing voice response technology, capture certain touch tone and/or voice responses that permit positive identification of the caller as the person authorized by the telephone company to use that telephone for outbound calls; and this process is accomplished by
having the person needing authorization for the telephone communicate and interact with the present invention via telephone line prior to utilizing the telephone the first time;
using a Voice Response System (VRS) on computer to interact with the caller to obtain information and voice prints;
converting incoming touch tone DTMF signals to computer readable signals so touch tone responses by the caller can be automatically handled by the computer program;
using Dialed Number Identification System (DNIS) signals to determine the number called as a code for the computer program to identify what parts of the present invention are needed to control telephone fraud risk for the telephone involved;
using Automatic Number Identification (ANI) to capture the telephone number of the telephone being used by the caller, for the purpose of obtaining that information as part of the risk control algorithm and determining if a voice print is already anchored to that telephone;
using Automatic Number Identification (ANI) to capture the telephone number of the telephone being used by the caller, for the purpose of obtaining that information as part of the data permanently attached to the computer record of that transaction,
using Automatic Number Identification (ANI) to capture the telephone number of the telephone being used by the caller, for the purpose of obtaining that information as part of the data available to fraud investigators to assist in the capture of perpetrators of a fraudulent telephone transaction,
anchoring all transaction data together, including voice responses and touch tone responses of the caller plus call detail records plus computer generated information resulting from data base relationships, as a Record Stamp of the transaction;
using the Record Stamp of the transaction to recover the complete history of the call together with all pertinent information;
using the Record Stamp as a method for fraud investigators to access and reproduce information about the call, caller and the overall transaction;
using the DNIS combined with a data base of voice prints to determine if the computer program requires a unique voice print to be anchored to the applicable telephone number before the telephone can be authorized for use;
creating a voice print of the person initially issued the telephone as a unique and positive identification method, to identify the caller as the person who is authorized to use the telephone;
creating a fixed relationship between a voice print and a telephone number, whereby the voice print is "anchored" to the telephone number in such a way that the computer can determine if the caller's voice print is the same as the anchored print;
using the voice print of the person initially issued the telephone as the authorized pattern, and comparing the voice print of the caller with the authorized pattern to determine if the caller is the person authorized to use that telephone;
capturing a voice print of the caller that can be used by fraud investigators and law enforcement personnel to positively identify a person as the caller in a fraudulent transaction;
maintaining a data base of authorized patterns (voice prints of originally authorized users of that telephone) that can only be accessed or altered by approved persons;
establishing a process for using identification numbers and passwords to track and limit telephone use of that telephone;
establishing a process whereby the computer looks up in an historical data base the historic use of a telephone by the using person, and compares the historic use with frequency parameters and dollar volume parameters;
establishing a process whereby the computer looks up in a historical data base the historic use of a telephone, and compares the historic use with frequency parameters and dollar volume parameters for the purpose of limiting or preventing abusive use of a telephone;
establishing a process whereby the computer looks up in a historical data base the historic use of a telephone by the user, and compares the historic use with frequency parameters and dollar volume parameters for the purpose of identifying a telephone transaction as having a high probability of being fraudulent;
establishing a process whereby the computer looks up in a historical data base the historic use of a telephone, and compares the historic use with frequency parameters and dollar volume parameters for the purpose of identifying a telephone transaction as having a high probability of being fraudulent and then capturing information from the caller in response to question prompts that increases the probability of identifying the perpetrator despite his attempts to give false information;

11. A method of using a voice print of a person speaking his own name as a distinct and unique identification pattern to identify the authorized telephone user and thereby control the use of a particular fixed location or mobile telephone, and this method is comprised of the following steps:
the authorized user or users, identified by authorized telephone company or cellular telephone company personnel and in a secure telephone company approved location, calls the present invention via telephone and, at the prompt, speaks his full name; or
the authorized telephone user (or users), identified by authorized personnel and in a secure approved location, calls the present invention via telephone and, at the prompt, speaks his full name and his Personal Identification Number (PIN); or
the telephone or communication device purchaser calls the present invention via telephone and, at the prompt, speaks his full name and his Personal Identification Number (PIN);
the Voice Response System (VRS) on the present invention, using Dialogic VR/40 and D/41D cards or the equivalent and Voice Control Systems' speaker verification software or the equivalent, captures what the authorized telephone user says and creates a voice print file;
the voice print file contains the voice characteristics of the speaker, the sounds of the spoken message, and the spoken message, concatenated in such a way that it forms a unique and distinct identification that can not be duplicated except by the person who first spoke it;
the present invention creates a fixed relationship between the voice print of the authorized telephone user and the telephone number such that if a different voice print is later associated with that same telephone number, the computer can differentiate and determine that the second relationship would be unauthorized.

12. A method of capturing information during a telephone call, which information can assist in the capture of persons committing telephone call fraud, the method comprising the following steps:
the person attempting unauthorized use of a telephone or communicating device, hereinafter called the "Defrauder", must attempt to make the present invention conclude that the Defrauder is an authorized user of that telephone, and this Defrauder calls the present invention to obtain approval for the telephone call;
the Defrauder is prompted to respond with voice and touch tone responses just as if he were the authorized telephone user;
by comparing the voice print of the Defrauder speaking the authorized telephone user's name with the anchored voice print for the given telephone, the computer can determine that the Defrauder is not an authorized user of that telephone; or
by comparing the touch tone responses of the Defrauder to the known personal, demographic and telephone records of the authorized telephone user which are anchored to the given telephone, the computer can determine that the Defrauder is not the authorized telephone user; or
by comparing the voice responses of the Defrauder to the known personal, demographic and telephone records of the authorized user of that telephone which are anchored to the given telephone, the computer can determine that the Defrauder is not the authorized telephone user; or
by comparing the voice responses of the Defrauder to the known personal, demographic and telephone records of the authorized telephone user which are anchored to the given telephone, a live operator can determine that the Defrauder is not the authorized telephone user; or
by comparing the touch toned PIN responses of the Defrauder to the known correct PIN number of the authorized telephone user which are anchored to the given telephone, the computer can determine that the Defrauder is not the authorized telephone user;
the present invention creates a Record Stamp, which is an information file on the computer, that ties all information captured during the transaction plus call detail records plus computer generated information resulting from data base relationships;
the Record Stamp is archived in the computer memory, and the present invention can recall the Record Stamp from computer memory and replay the transaction to provide fraud investigators and law enforcement personnel and other approved persons all data generated during the actual transaction;
the present invention creates a voice print of every caller as part of the Record Stamp information, and that voice print of the caller speaking the authorized telephone user's name, or name plus PIN number, becomes a positive identification of the Defrauder;
the present invention can replay the Defrauder's voice print of the authorized telephone user's name;
if a suspected Defrauder is apprehended, he can be asked to create a voice print of the authorized telephone user's name, or name and PIN number, and that voice print can be compared by the present invention with the actual Defrauder's voice print (captured during the fraudulent transaction), whereby the present invention can determine if the suspected Defrauder is actually the Defrauder.

13. The present invention provides a process of capturing voice prints of callers and, if said caller becomes a suspect in a telephone fraud case or otherwise conducts illegal activity, the present invention can create a duplicate of the archived historical Record Stamp of the entire transaction, and that duplicate Record Stamp could be transported via computer diskette or telephone line to a clone of the present invention at another location, played aloud for an audience such as a jury, and would constitute evidence in criminal fraud cases; the steps of this process being
the present invention pulls the Record Stamp file from the historical archive section of its memory into the computer's RAM;
the present invention creates a duplicate file of all voice responses and also a duplicate file of all non-voice information;
the duplicate files can be transported on a diskette, via modem, or over the telephone line to a duplicate of the present invention or substitute VRS computer, whereupon the Record Stamp including the voice print of the caller can be replayed at the second location, which could be in a court room or other law enforcement location;
if the voice print of the caller matches the voice print of the suspect, prosecutors would have clear and definite evidence that the suspect was the caller and perpetrator;
this evidence in the form of the Record Stamp on diskette can be securely filed with other court evidence.

14. A method of using a voice print of a person speaking his own name as a distinct and unique identification pattern to identify the person as authorized to enter a secure area or access confidential information and thereby control the access to a particular location or confidential information, and this method is comprised of the following steps:
the person entitled to security clearance, personally identified and Supervised by authorized company personnel and in a secure approved location, calls the present invention via telephone and, at the prompt, speaks his full name or his name plus a PIN number;
the Voice Response System (VRS) on the present invention, using Dialogic VR/40 and D/41D cards or the equivalent and Voice Control Systems' speaker verification software or the equivalent, captures what the person entitled to the security clearance says and creates a voice print file;
the voice print file contains the voice characteristics of the speaker, the sounds of the spoken message, and the spoken message, concatenated in such a way that it forms a unique and distinct identification that can not be duplicated except by the person who first spoke it;
the present invention creates a fixed relationship between the voice print of the security cleared person and the access to secured locations and confidential information such that if a different voice print is later associated with that same access, the computer can differentiate and determine that the second relationship would be unauthorized;
when the security cleared person desires access to a secure location or confidential information, he is first asked to communicate with the present invention and speak the required voice print information, and also may be required to touch tone into a telephone keypad or otherwise enter his PIN number or other identifying code, into a microphone beside the access entrance;
the present invention receives the spoken voice and entered impulses from the requested access location, compares that resulting voice print with a data base of voice prints authorized access at the requested access location, and determines if the requesting person is an authorized cleared person;
if the requesting person is an authorized cleared person for the requested access location, the present invention signals the lock at the requested access location and access is permitted;
if the requesting person is not an authorized cleared person for the requested access location, the present invention does not signal the lock at the requested access location and access is not permitted;
if the requesting person is not an authorized cleared person for the requested access location, the present invention places the captured voice print of the requesting person into a separate file of denied voice prints, which file is available to authorized or law enforcement persons for the purpose of matching attempted unauthorized accesses to suspects.
